# EUROPEAN PATENT APPLICATION

(11) **EP 4 571 158 A1**
(43) Date of publication of application: **18.06.2025**
(21) Application number: 24219719.2
(22) Date of filing: 13.12.2024
(51) Int. Cl.: F16K 5/06, F16K 5/20, F16K 11/22, F16K 27/06

(54) **A DOUBLE BALL VALVE SYSTEM**

(30) Priority: 14.12.2023 IT 202300026721
(71) Applicant: Erreesse S.r.l., 28075 Grignasco (MO) (IT)
(72) Inventor: SANFILIPPO, Moreno, 28075 Grignasco (MO) (IT)
(74) Representative: Cantaluppi, Stefano

(57) **Abstract**

Double ball valve system (1) comprising: - a valve body (5) in which a fluid passage (4) is defined, said body (5) having at opposite free ends of said passage (4) a respective connector (8); two seats (9, 10) for a respective closure member (11, 12) formed in series in said valve body (5) along said passage (4); a ball type closure member (11, 12) and related sealing systems (20), mounted in the corresponding seat (9, 10) to selectively intercept said passage of fluid (4), the sealing systems (20) comprising opposing pairs of sealing seat members (21) facing each other in said seats (9, 10) with a sealing surface of the respective seat member (21) against the corresponding closure member (11, 12). The valve body (5) is assembled by two structurally independent parts (6, 7), each part (6, 7) including a respective seat (9, 10) and the respective connector (8), a sleeve (25) being interposed and retained between said parts (6, 7) which carries one of the respective seat members of each seat, the other seat member and the corresponding seat being carried on the corresponding part of valve body (5).

## Description

The present invention relates to a double ball valve system including the features mentioned in the preamble of the main claim.

Valve systems including such features are known from the current production of the same applicant.

Preferentially, but not exclusively, the system applies to the so-called DB&B valves with flanged ends, i.e. "Double Block & Bleed" with double closure members, which allow, by closing both closure members, there to be no pressure in the centre of the valve body cavity, isolating the upstream and downstream lines. The presence of a draw-off port allows, with the closure members closed, the fluid collected at the valve centre to be drawn off for analysis or simply to drain the valve section between the closure members.

In contrast to standard ball valves with a single closure member, whose gauge is standardised, DB&B valves with a double closure member have different gauges depending on the model and manufacturer and thus their installation requires specific dimensional adaptations of the plant.

For this reason, valves with a double closure member with narrow gauges (face-to-face) are particularly popular, as they are better adaptable to existing systems than valves with larger gauges.

The prevailing construction criterion for valves with a double closure member is to make the valve body in three parts. The two axially distal parts generally consist of connectors, in this case flanges, fitted with a short tubular trunk that is additionally flanged and bearing a respective sealing system (seat member). The central, larger part (valve body) in turn has two coaxial cylindrical seats separated by a narrow section at the opposite ends of which are further respective sealing systems (seat members). The larger diameter part forms a seat for a respective closure member, which in turn can be either of the trunnion type or floating. The overall extension of the valve comes from the sum of the axial extension of the three constituent parts, which places physical limits on the reduction of the axial footprint.

The technical problem underlying the present invention is to develop a double ball valve that is structurally and functionally designed so as to be less susceptible to the physical limitations mentioned above with reference to the mentioned prior art.

Within the context of this problem, it is an object of the invention to reduce the axial footprint of the double ball valve system as much as possible, both in the floating and trunnion configuration.

This problem is solved and this and other objects are achieved by a double ball valve system according to the invention, made in accordance with at least some of the features of the appended claims.

In a preferred embodiment, the double ball valve system comprises a valve body in which a fluid passage is defined; the valve body has at opposing free ends of the fluid passage a respective connector or closing element of the valve body. The body also has, preferably, two seats for a respective closure member, formed in series along the fluid passage, and a ball closure member and its sealing system mounted in the corresponding seat to selectively intercept the fluid passage.

Preferably, the sealing systems comprise pairs of opposing sealing seat members facing each other in their respective seats in contact against the corresponding closure member.

Preferably, the sealing systems comprise pairs of opposing sealing seat members facing each other in said seats with a sealing surface of the respective seat member against the corresponding closure member.

In the case of trunnion shutters, the seat members are preferably sprung towards the corresponding closure member. They are also stressed by the pressure thrust established in the valve body so that they adhere with proportional force to the ball of the closure member. In floating closure members, the seat members are not movable, but the ball of the closure member is.

Preferably, the valve body is assembled by two structurally independent parts, each part including a respective seat and the respective connector. Preferably, a sleeve carrying one of the respective seat members is interposed and preferably retained between the parts of the valve body. Preferably, the other seat member and the corresponding seat are carried on the corresponding part of the valve body. In this way, access for mounting the closure members is carried out from the centre of the valve so that the axial extension is significantly reduced.

In some embodiments, the valve body is assembled by two structurally independent parts, each part including the respective connector, a sleeve being interposed and retained between said parts which carries one of the respective seat members of each seat, the other seat member and the corresponding seat being carried on the corresponding part of valve body.

Preferably, each of said parts includes a respective seat.

Preferably, one of said parts has an axial extension prevailing over that of the other of said parts, the first of said parts includes one of said seats.

Preferably, one of said parts includes a tubular spacer that presses said flange against the other of said parts.

Preferably, the connectors are made as a single piece with the respective part of the valve body, further reducing their size.

Preferably, the connectors are one or both of the flanged type.

Preferably, the valve system has trunnion type supported closure members and even more preferably the seat members are sprung.

Preferably, the sleeve is retained between said parts by its outer circumferential flange.

Preferably, the flange is retained in an annular chamber defined between said valve body parts.

Preferably, said annular chamber is connected to a draw-off device.

Preferably, the sleeve is removably retained in said valve body.

In some embodiments, said flange has a circular narrowing defined by two opposing circular grooves, said circular narrowing being housed between two circular protrusions defined on the facing surfaces of said parts.

Preferably, said flange has at least one channel arranged radially with respect to an axis, said passage being defined along said axis, said channel being configured to create a fluidic connection between said passage and said annular chamber.

Preferably, said flange peripherally has a recess at said channel, said recess being configured to fluidically connect the peripheral end of said channel with said annular chamber.

The characteristics and advantages of the invention will become clearer from the following detailed description of preferred but not exclusive embodiments thereof illustrated, by way of non-limiting example, with reference to the accompanying drawings in which:

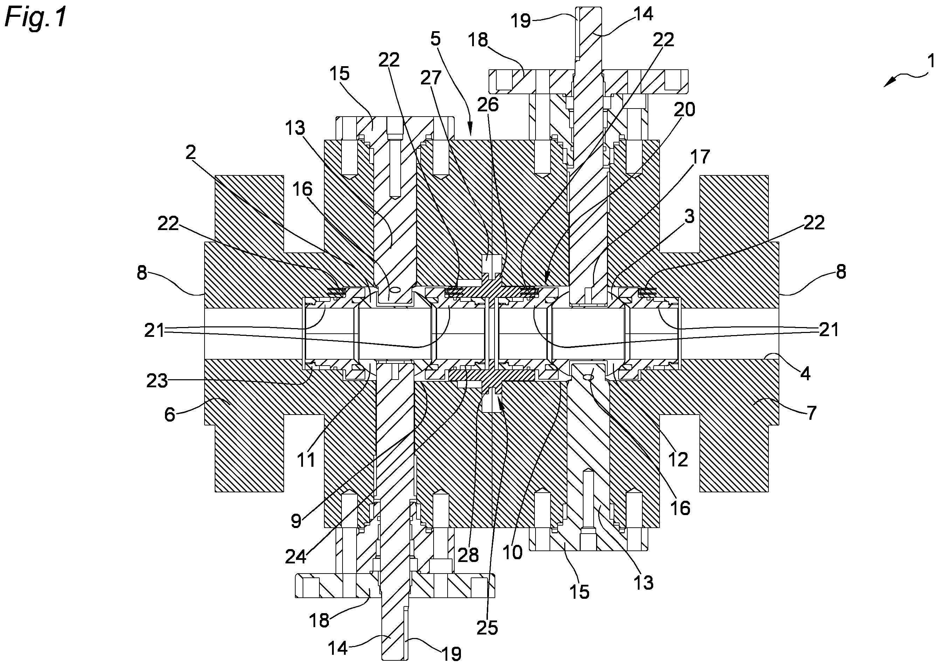

- Fig. 1 is a cross-sectional view of a valve system according to the present invention and in a first example embodiment;

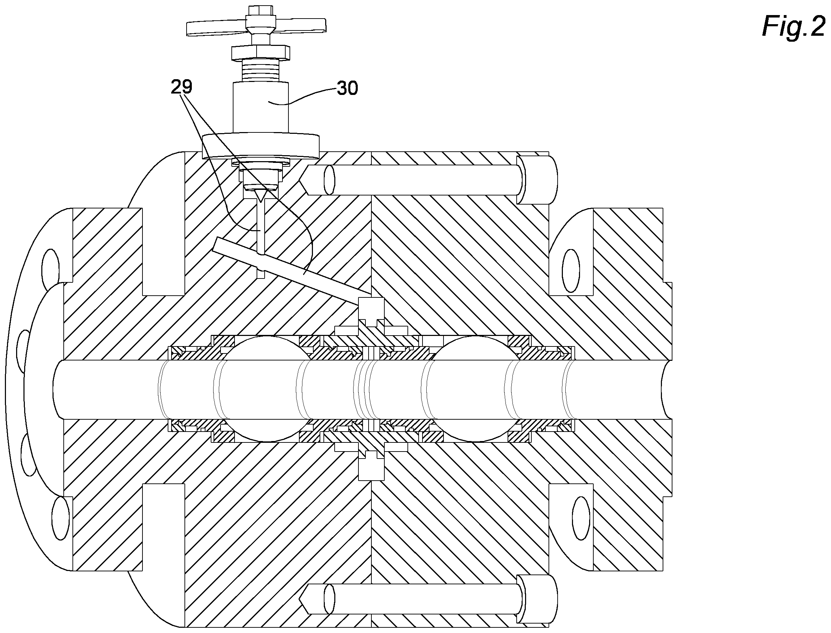

- Fig. 2 is a 90° rotated cross-sectional view of the valve system in Fig. 1;
- Fig. 3 is a cross-sectional view of a valve system in a second example embodiment of the present invention;
- Fig. 4 is a cross-sectional view of a valve system in a third example embodiment of the present invention;
- Fig. 5 is a cross-sectional view of a valve system according to the present invention and in a fourth example embodiment;
- Fig. 6 is another sectional view of the valve system in Fig. 5;
- Figure 7 is a perspective view of a component of the valve system in Fig. 5;
- Fig. 8 is a cross-sectional perspective view of the component in Fig. 7;
- Fig. 9 is a cross-sectional view of a valve system according to the present invention and a fifth example embodiment;
- Fig. 10 is another cross-sectional view of the valve system in Fig. 9;
- Fig. 11 is a cross-sectional view of a valve system in a sixth example embodiment of the present invention.

A valve system according to the present invention is collectively referred to in the figures by number 1. The system 1 preferably has double closure members with the closure members 2, 3 placed in series (but also with several outlets in the case of "multi way" valves) along a fluid passage 4, preferably axial, as will be clarified below, but may be further combined where necessary with other valves or valve systems for specific functions requiring such a combination.

The valve system 1 comprises a valve body 5 formed by two parts 6, 7 assembled together, e.g. by screw connections or by a different coupling known in the art.

According to a first example embodiment, the two parts 6, 7 are preferably specularly symmetrical and each comprises a respective connector 8, preferably of flanged type, placed at an axially free end of the passage 4. The term connector in this context is intended to include any element with which the valve body can be connected to the piping of a plant or, if necessary, even a simple closing element of the valve body.

In each of the parts 6, 7 a respective seat 9, 10 for a corresponding closure member 11, 12, preferably of the ball type, is formed.

Each closure member 11, 12 is preferably of the rotatably supported type (trunnion) in the respective part of the valve body by means of a fixed pin 13 at one end and a manoeuvring pin 14 at the diametrically opposite end. The fixed pin 13 has a flanged part 15 with which it is fixed to the valve body and protrudes for a short section 16 into the fluid passage. The manoeuvring pin 14 is rotationally integral with the corresponding closure member, e.g. by means of a tongue connection 17 or nosepiece (square or rectangular), it is held in place by a gland flange 18 and bears at its free end opposite the closure member a manoeuvring key 19 for a lever or other operating means.

Each closure member is equipped with a respective sealing system 20 which, in the proposed example, comprises a pair of opposing seat members 21. The seat members 21 are preferably identical to each other and face each other in the respective seats 9, 10. They are preferably fitted with a respective spring 22 to press a sealing surface 23 of the respective seat member against the corresponding closure member 11, 12. One of the seat members 21 of each pair is housed in a recess 23 of the respective valve body part. The other of the seat members 21 of each pair is housed in a recess 24 formed in a sleeve 25 located centrally between the two parts 6, 7 and axially retained therein, preferably in a removable manner, by the presence of its outer circumferential flange 26 preferably formed in an axially median position on the sleeve and housed in an annular chamber 27 defined on the facing surfaces of the two parts 6, 7. The flange 26 is preferably affected by a circumferential groove 28. The chamber 27 is preferably connected via channels 29 to a draw-off tap 30 which serves to draw off all or part of the fluid in the chamber 27 with the closure members closed.

It will be observed that the sleeve 25 constitutes an element of continuity of the fluid passage 4 between the two parts of valve body 5, being in a hydraulically sealed condition with the respective seat members 21 which are supported by it.

It will also be appreciated that this construction of the valve system allows for an appreciable shortening of its axial dimension between the two flanges. This leads to improved adaptability of the valve system in existing plants.

The valve system structure is also very resistant to high operating pressures and is highly reliable.

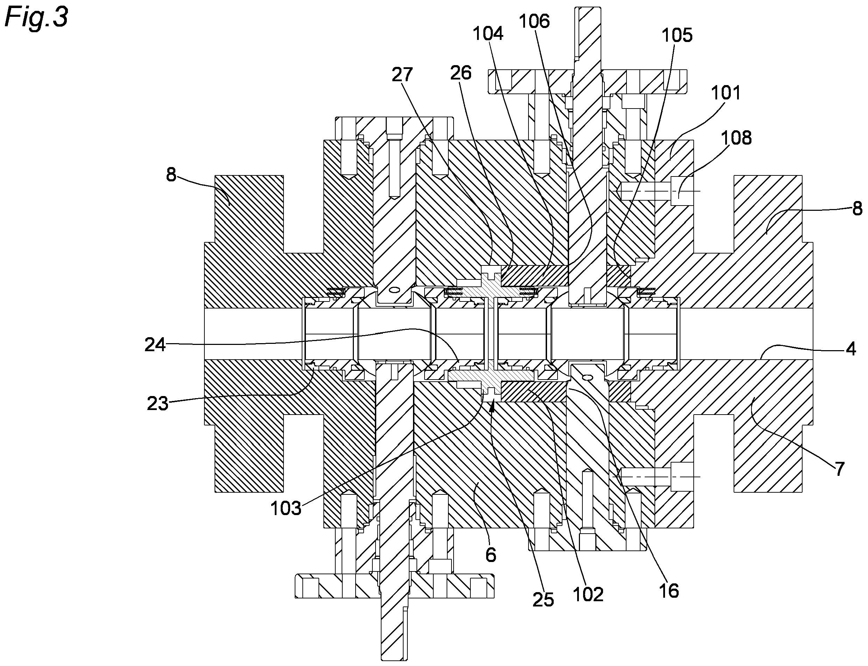

In a second example embodiment of the invention illustrated in Figure 3, the two parts are not symmetrical. Parts equivalent to those in the previous example are marked by the same numerical references and will not be described again below.

Unlike the previous example, part 6 of the valve body has an axial extension prevailing over that of part 7 and, instead of ending at the centreline of the annular chamber 27, it is continued maintaining the diameter of the annular chamber up to a counter-flange 101 of part 7 with identification of a cavity 102 coaxial to the fluid passage 4. In the cavity 102 the sleeve 25 is inserted whose circumferential flange 26 is pressed against a shoulder 103 by a tubular, preferably cylindrical, spacer 104. The spacer 104 is held in place against the circumferential flange 26 by an annular projection 105 of the counter-flange 101. The counter-flange 101 also houses the seat or recess 22 of the seat member 21. In the case of the trunnion valve as exemplified, two diametrically opposed holes 106 are formed in the spacer 104 for the passage of the respective pins 13, 14 for supporting and manoeuvring the corresponding closure member 12. The counter-flange 101 is attached to the part 6 of the valve body, e.g. by means of screws 108, and in turn carries a flanged connector 8. This example of a valve system can also be fitted with a draw-off system 29, 30 of the annular chamber 27 similar to the one described above.

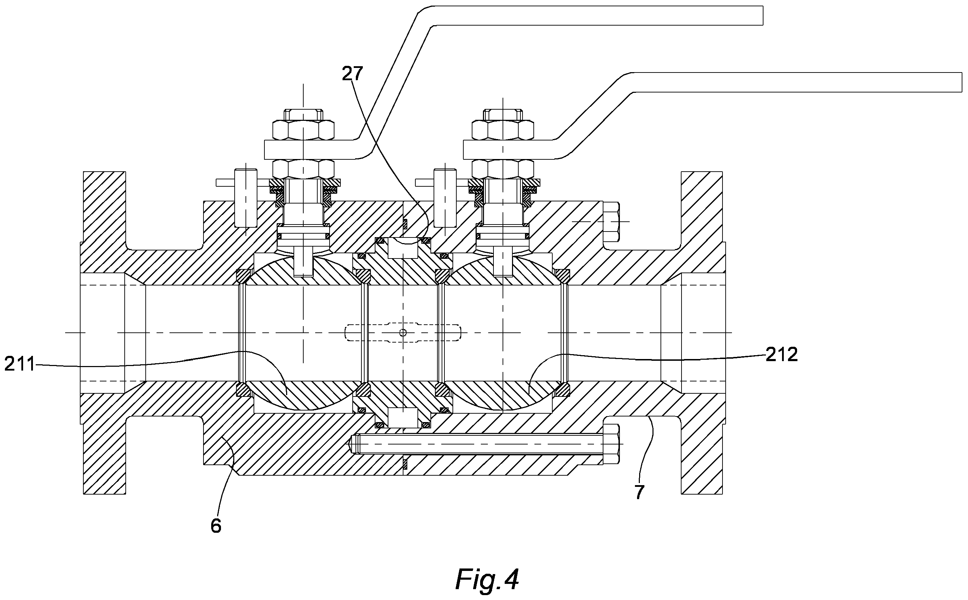

According to a third example embodiment of the invention illustrated in Figure 4, the same invention is applicable to valves with floating closure members. Parts equivalent to those in the previous examples are marked by the same numerical references and will not be described again below.

In contrast to the previous examples, the closure members 211, 212 are mounted floating in the respective seat and the respective seat members are of a different type, i.e. the one typically provided for floating valves.

Parts 6 and 7 of the valve body can be symmetrical as in the first example or asymmetrical as in the second example. Shown here is the symmetrical configuration, ending at the centreline of the annular chamber 27.

The remaining features are essentially identical, except for the different shape of the seat members and the absence of the fixed pin 13 supporting the closure members.

This example of a valve system can also be fitted with a draw-off system 29, 30 of the annular chamber 27 similar to the one described above.

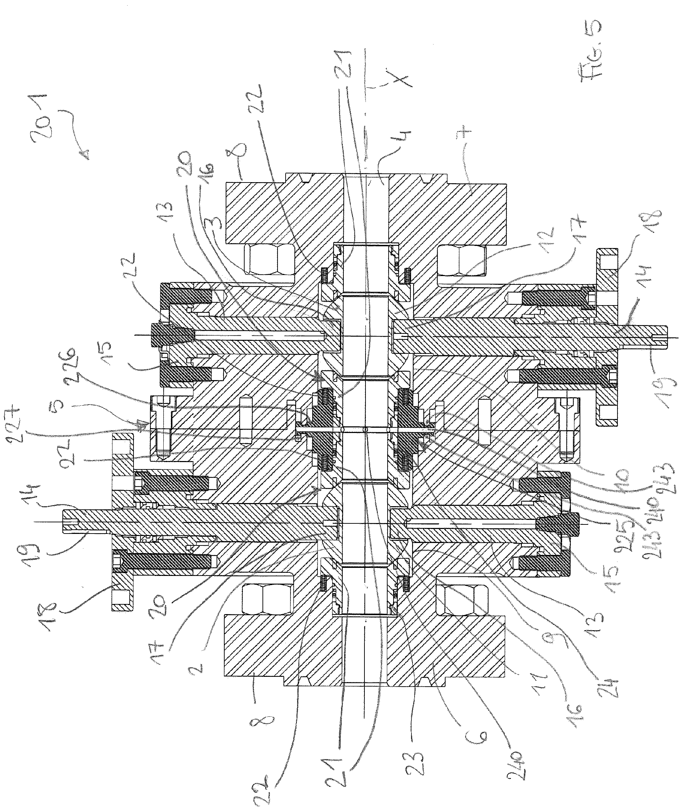

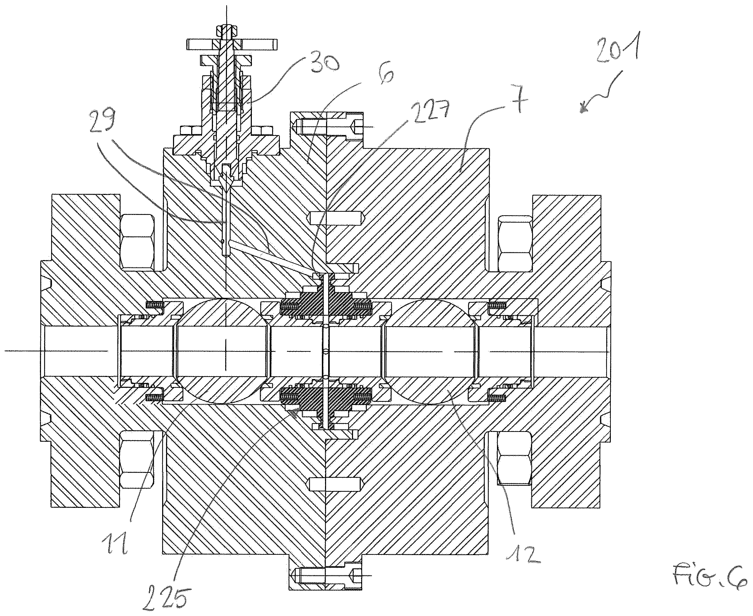

In a fourth example embodiment of the invention, illustrated in Figure 5 and Figure 6, the valve system is denoted overall by 201.

The system 201 preferably has double closure members with the closure members 11, 12 placed in series (but also with several outlets in the case of "multi way" valves) along a fluid passage 4, preferably axial, but may be further combined where necessary with other valves or valve systems for specific functions requiring such a combination.

The valve system 201 comprises a valve body 5 formed by two parts 6, 7 assembled together, e.g. by screw connections, as illustrated, or by a different coupling known in the art.

The two parts 6, 7 are preferably and substantially symmetrical and each comprise a respective connector 8, preferably of the flanged type, placed at an axially free end of the passage 4.

As previously specified, the term connector in the present context is intended to include any element with which the valve body can be connected to the piping of a plant or, at the limit, even a simple closing element of the valve body.

In each of the parts 6, 7 a respective seat 9, 10 for a corresponding closure member 11, 12, preferably of the ball type, is formed.

Each closure member 11, 12 is preferably of the rotatably supported type (trunnion) in the respective part of the valve body by means of a fixed pin 13 at one end and a manoeuvring pin 14 at the diametrically opposite end. The fixed pin 13 has a flanged part 15 with which it is fixed to the valve body and protrudes for a short section 16 into the fluid passage. The manoeuvring pin 14 is rotationally integral with the corresponding closure member, e.g. by means of a tongue connection 17 or nosepiece (square or rectangular), it is held in place by a gland flange 18 and bears at its free end opposite the closure member a manoeuvring key 19 for a lever or other operating means.

Each closure member is equipped with a respective sealing system 20 which, in the proposed example, comprises a pair of opposing seat members 21. The seat members 21 are preferably identical to each other and face each other in the respective seats 9, 10. They are preferably fitted with a respective spring 22 to press a sealing surface of the respective seat member against the corresponding closure member 11, 12. The spring 22 preferably consists of coil springs.

One of the seat members 21 of each pair is housed in a recess 23 of the respective valve body part. The other of the seat members 21 of each pair is housed in a recess 24 formed in a sleeve 225 located centrally between the two parts 6, 7 and axially retained therein, preferably in a removable manner, by the presence of its outer circumferential flange 226 preferably formed in an axially median position on the sleeve 225 and housed in an annular chamber 227 defined on the facing surfaces of the two parts 6, 7.

The flange 226 has at least one channel 240 arranged radially with respect to an axis X along which the passage 4 is defined. The channel 240 is configured to create a fluidic connection between the passage 4 and the annular chamber 227.

In the example illustrated, there is a plurality of channels 240, which promote rapid and homogeneous distribution of the fluid in the annular chamber 227.

The channels 240 are in an axially median position on the flange 226.

The flange 226 peripherally has a recess 241 at each of the channels 240. The recess 241 is configured to fluidically connect the peripheral end of the channel 240 with the annular chamber 227.

The annular chamber 227 is in fact off-centre with respect to the channels 240, i.e. it is not axially median to the sleeve 225, and the recess 241 allows fluid to reach the annular chamber 227 from the channel 240, this recess 241 having an elongated shape towards the chamber.

The chamber 227 is connected via channels 29 to a draw-off tap 30 which serves to draw off all or part of the fluid in the chamber 227 with the closure members closed.

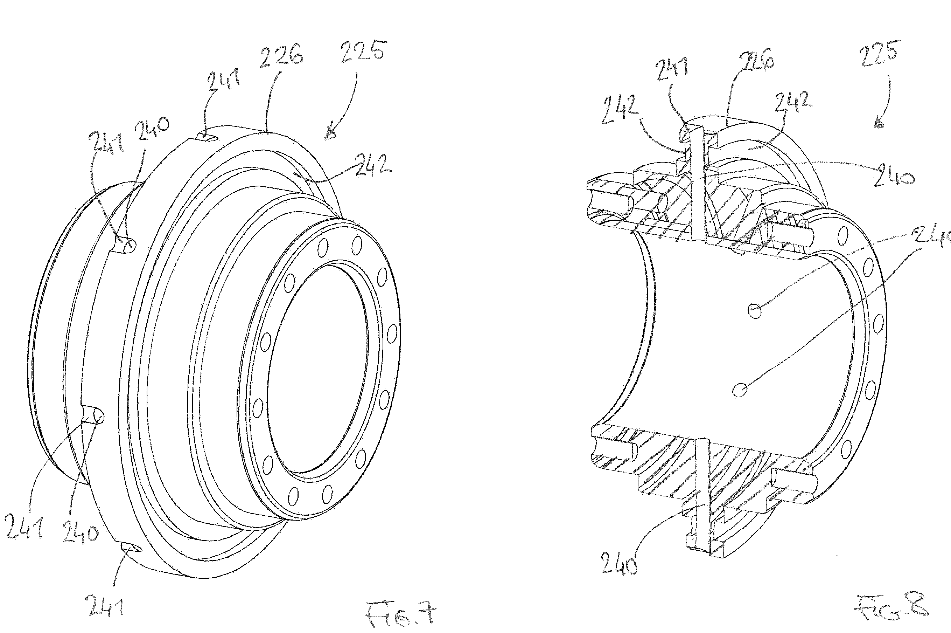

Figure 7 and Figure 8 show the sleeve 225 in a perspective view. In these figures, the plurality of channels 240, their respective recesses 241 and other details of the sleeve 225 are clearly visible, which are described below.

The flange 226 has a circular narrowing defined by two opposing circular grooves 242. The circular narrowing is housed between two circular protrusions 243 shown in Figure 5 and defined on the facing surfaces of parts 6 and 7.

It will be observed that the sleeve 225 constitutes an element of continuity of the fluid passage 4 between the two parts of valve body 5, being in a hydraulically sealed condition with the respective seat members 21 which are supported by it.

As in the first example, this valve system construction allows an appreciable shortening of its axial dimension between the two flanges, and the valve system structure is also very resistant to high operating pressures and highly reliable.

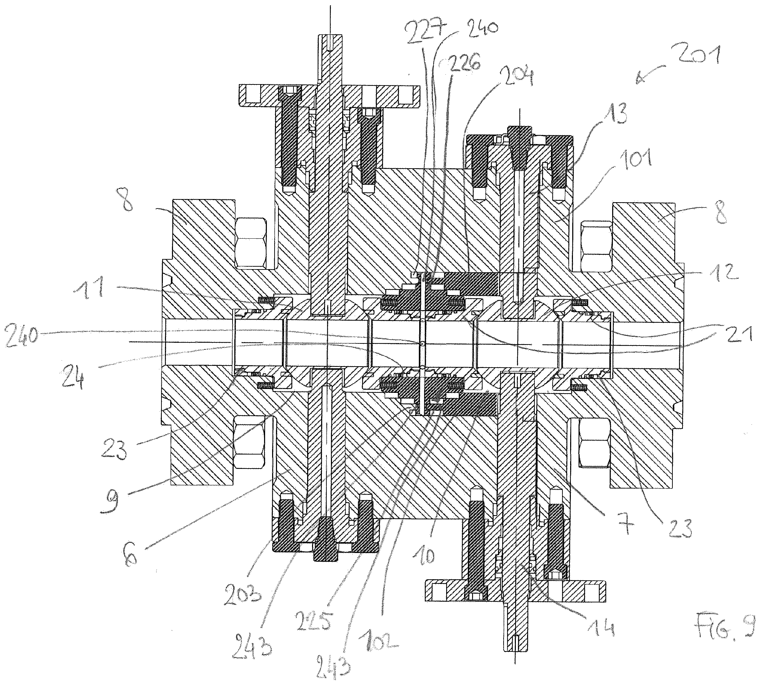

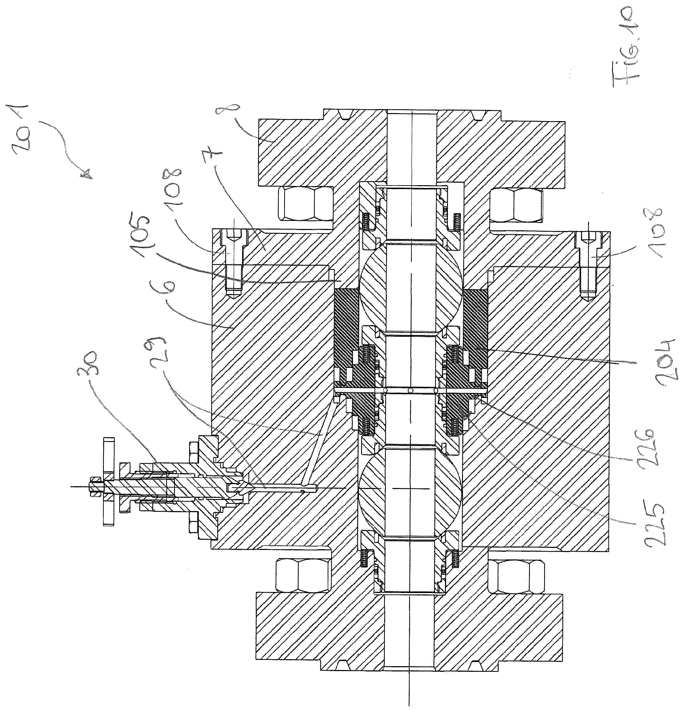

According to a fifth example embodiment of the invention illustrated in Figure 9 and Figure 10, the two parts 6 and 7 are not symmetrical. Parts equivalent to those in the previous example are marked by the same numerical references and will not be described again below.

Unlike the previous example, part 6 of the valve body has an axial extension prevailing over that of part 7 and, instead of ending at the centreline of the flange 226, part 6 is continued maintaining the diameter of the annular chamber up to a counter-flange 101 of part 7 with identification of a cavity 102 coaxial to the fluid passage 4. In the cavity 102 the sleeve 225 is inserted whose circumferential flange 226 is pressed against a shoulder 203 by a tubular, preferably cylindrical, spacer 204 and with a protrusion projecting towards the flange 226.

The same part 6, which has greater axial extension, includes one of the seats 9.

The other part 7 includes the spacer 204 that presses the flange 226 against the other part 6.

In particular, the flange 226 has a section narrowing, as in the previous example, defined by two opposing circular grooves 242. This narrowing is housed between two protrusions 243, one defined on the surface of part 6, acting as a shoulder 203, and the other on the spacer 204 of part 7.

The spacer 204 is held in place against the circumferential flange 226 by an annular projection 105 of the counter-flange 101, as shown in Figure 10.

The second part 7 accommodates the seat or recess 23 of a seat member 21.

In the case of the trunnion valve as exemplified, two recesses or two diametrically opposed holes are formed on the spacer 204 for the passage of the respective pins 13, 14 for supporting and manoeuvring the corresponding closure member 12.

The counter-flange 101 is attached to part 6 of the valve body, e.g. by means of screws 108, as shown in Figure 10, and in turn carries a flanged connector 8. This example of a valve system can also be fitted with a draw-off system 29, 30 of the annular chamber 227 similar to the one described above.

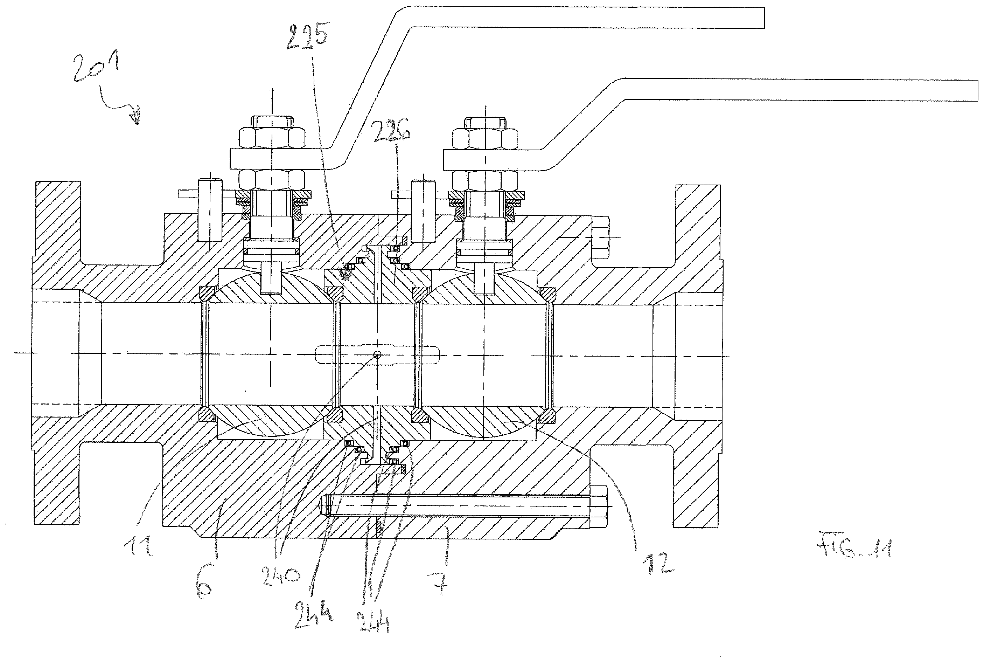

According to a sixth example embodiment of the invention illustrated in Figure 11, the same invention, and preferably with the sleeve 225 of the type described for the two previous examples, is applicable to valves with floating closure members (of the "floating" type). Parts equivalent to those in the previous examples are marked by the same numerical references and will not be described again below.

In contrast to the previous two examples, the closure members 11, 12 are mounted floating in the respective seat and the respective seat members are of a different type, i.e. the one typically provided for floating valves.

Parts 6 and 7 of the valve body can be symmetrical as in the fourth example or asymmetrical as in the fifth example. Shown here is the symmetrical configuration, in which the sleeve 225 is placed centrally between the two parts 6, 7.

As shown in Figure 11, the sleeve 225 has two circumferential steps at the base of the flange 226 and specularly symmetrical. The sealing system is reinforced around the sleeve with gaskets 244, preferably of the O-ring type, at the flange 226 and steps.

The remaining features are essentially identical, except for the different shape of the seat members and the absence of the fixed pin 13 supporting the closure members.

This example of a valve system can also be fitted with a draw-off system of the annular chamber 227 similar to the one described above.

## Claims

1. Double ball valve system (1) comprising:
- a valve body (5), in which a fluid passage (4) is defined, said body (5) having a respective connector (8) at opposite free ends of the passage (4),
- two seats (9, 10) for a respective closure member (11, 12) which are formed in series in the valve body (5) along said passage (4),
- a ball type closure member (11, 12), and respective sealing systems (20), which is mounted in the corresponding seat (9, 10) to selectively intercept said fluid passage (4),
wherein the sealing systems (20) include pairs of sealing seat members (21) which are opposite and facing in said seats (9, 10) with a sealing surface of the respective seat member (21) against the corresponding closure member (11, 12),
**characterised in that** the valve body (5) is assembled by two structurally independent parts (6, 7), each part (6, 7) including a respective seat (9, 10) and the respective connector (8), a sleeve (25) being interposed and retained between said parts (6, 7) which carries one of the respective seat members of each seat, the other seat member and the corresponding seat being carried on the corresponding part of valve body (5),
said sleeve (25) being retained between said parts (6, 7) by means of an outer circumferential flange (26) thereof, said flange (26) being retained in an annular chamber (27) defined between said parts (6, 7) of valve body (5) and said annular chamber (27) being connected to a draw-off device (30).

2. Double ball valve system (1) according to claim 1, wherein each of said parts (6, 7) of valve body (5) is integral with the respective connector (8).

3. Double ball valve system (1) according to claim 1 or 2, wherein at least one of said connectors (8) is of the flanged type.

4. Double ball valve system (1) according to claim 3, wherein both of said connectors (8) are of the flanged type.

5. Double ball valve system (1) according to one or more of the preceding claims, wherein said closure members (11, 12) are trunnion type supported ball closure members.

6. Double ball valve system (1) according to claim 5, wherein said seat members (21) are sprung towards the respective closure member (11, 12).

7. Double ball valve system (1) according to one or more of the preceding claims, wherein said sleeve (25) is removably retained in said valve body (5).

8. Double ball valve system (201) comprising:
- a valve body (5), in which a fluid passage (4) is defined, said body (5) having a respective connector (8) at opposite free ends of the passage (4),
- two seats (9, 10) for a respective closure member (11, 12) which are formed in series in the valve body (5) along said passage (4),
- a ball type closure member (11, 12), and respective sealing systems (20), which is mounted in the corresponding seat (9, 10) to selectively intercept said fluid passage (4),
wherein the sealing systems (20) include pairs of sealing seat members (21) which are opposite and facing in said seats (9, 10) with a sealing surface of the respective seat member (21) against the corresponding closure member (11, 12),
**characterised in that** the valve body (5) is assembled by two structurally independent parts (6, 7), each part (6, 7) including the respective connector (8), a sleeve (225) being interposed and retained between said parts (6, 7) which carries one of the respective seat members of each seat, the other seat member and the corresponding seat being carried on the corresponding part of valve body (5),
said sleeve (225) being retained between said parts (6, 7) by means of an outer circumferential flange (226) thereof, said flange (226) being retained in an annular chamber (227) defined between said parts (6, 7) of valve body (5), and said annular chamber (227) being connected to a draw-off device (30) said flange (226) has a circular narrowing defined by two opposing circular grooves (242), said circular narrowing being housed between two circular protrusions (243) defined on the facing surfaces of said parts (6, 7).

9. Double ball valve system (201) according to claim 8, wherein said flange (226) has at least one channel (240) arranged radially with respect to an axis (X), said passage (4) being defined along said axis (x), said channel (240) being configured to create a fluidic connection between said passage (4) and said annular chamber (227).

10. Double ball valve system (201) according to claim 9, wherein said flange (226) peripherally has a recess (241) at said channel (240), said recess (241) being configured to fluidically connect the peripheral end of said channel (240) with said annular chamber (227).

11. Double ball valve system (201) according to one or more of claims 8 to 10, wherein each of said parts (6, 7) includes a respective seat (9, 10).

12. Double sphere valve system (201) according to one or more of claims 8 to 10, wherein one of said parts (6, 7) has an axial extension prevailing over that of the other of said parts (6, 7), the first of said parts (6, 7) including one of said seats (9, 10).

13. Double ball valve system (201) according to the preceding claim, wherein one of said parts (6, 7) includes a tubular spacer (204) pressing said flange (226) against the other of said parts (6, 7).

14. Double ball valve system (201) according to one or more of claims 8 to 13, wherein said closure members (11, 12) are trunnion type supported ball closure members and said seat members (21) are sprung towards the respective closure member (11, 12).
